# EUROPÄISCHE PATENTSCHRIFT

(11) **EP 3 477 178 B1**
(45) Veröffentlichungstag und Bekanntmachung des Hinweises auf die Patenterteilung: **08.07.2020**
(21) Anmeldenummer: 18201750.9
(22) Anmeldetag: 22.10.2018
(51) Int. Cl.: F16L 11/127, F16L 53/38, H05B 3/58

(54) **BEHEIZBARER FLEXIBLER SCHLAUCH MIT AUFGEBRACHTEM HEIZELEMENT**
HEATABLE FLEXIBLE HOSE WITH APPLIED HEATING ELEMENT
TUYAU FLEXIBLE CHAUFFABLE À ÉLÉMENT CHAUFFANT MONTÉ

(30) Priorität: 26.10.2017 DE 202017106495 U
(43) Veröffentlichungstag der Anmeldung: 01.05.2019
(73) Patentinhaber: Elmeric GmbH, 72414 Rangendingen (DE)
(72) Erfinder: Fink, Franz-Werner, 72414 Rangendingen (DE)
(74) Vertreter: Kohler Schmid Möbus Patentanwälte

(56) Entgegenhaltungen:
- WO-A1-86/03362
- DE-A1-102016 118 931
- DE-C2- 3 152 305
- GB-A- 2 366 710

## Beschreibung

Die Erfindung betrifft einen flexiblen länglichen Schlauch mit mindestens einer nach außen gerichteten Oberfläche aus Nichtleitermaterial, insbesondere aus Kunststoff oder Kautschuk, auf welcher zumindest über einen ersten axialen Abschnitt längs der Schlauchachse eine elektrisch betreibbare Heizeinrichtung aufgebracht ist, die die Oberfläche in Umfangsrichtung im Wesentlichen gleichmäßig beheizen kann.

### Hintergrund der Erfindung

Ein solcher beheizbarer Schlauch ist etwa bekannt aus der DE 10 2013 226 629 A1.

Weitere derartige beheizbare Leitungssysteme werden bereits seit vielen Jahren und von zahlreichen Firmen auf dem Markt angeboten.

So beschreibt bereits die EP 0 456 024 A1 von 1990 einen mit Heizleitern in Form von Koaxialleitern mit Kupferleitern und einem Drahtgeflecht elektrisch beheizten Schlauch zur Beheizung von Scheibenwaschanlagen in Fahrzeugen.

Die DE 10 2004 023 385 A1 offenbart eine mittels einer elektrischen, im Wesentlichen von einem Heizdraht gebildeten Schlauchheizung beheizbare Schlauchanordnung mit Temperatursensor für ein Beatmungssystem.

In der DE 20 2005 004 602 U1 ist eine beheizte Flüssigkeitsleitung mit mehreren Kunststoffschichten beschrieben, in welche elektrische Leitungen in Form von Heizkabeln und Leiterdrähten eingebettet sind.

Die WO 2007/118728 A1 offenbart eine mittels einer parallelen Heizwasserleitung -als Alternative zu bekannten elektrischen Heizungen- beheizte Harnstoffleitung für Abgasnachbehandlungsanlagen von Brennkraftmaschinen.

Aus der DE 10 2009 022 995 A1 ist eine beheizbare Leitung zum Transport einer Harnstoff-Wasser-Lösung für ein Kraftfahrzeug bekannt, bei welcher ein oder mehrere Heizleiter aus Widerstandsdraht zwischen einem Innenschlauch aus polymerem Werkstoff und einer Ummantelung angeordnet sind. Insbesondere können die Heizdrähte auch schraubenförmig um den Innenschlauch gewickelt sein.

Aus der DE 31 52 305 C2 ist ein elektrisches Flächenheizelement bekannt, bei dem ein Träger mit halbleitendem Material bedruckt wird.

Bei allen diesen bekannten beheizbaren Leitungssystemen werden entweder als elektrische Heizelemente Heizdrähte um einen Kunststoffschlauch herumgewickelt oder es wird eine Beheizung mittels einer parallel zum Leitungssystem angeordneten Heizwasserleitung vorgeschlagen.

Eine Beheizung mittels Heizwasserleitung ist offensichtlich in der Herstellung ziemlich aufwändig, in der Bauweise relativ voluminös und in der Handhabung diffizil und umständlich.

Die oben geschilderten elektrischen Heizungssysteme basieren allesamt auf elektrischen Kabeln, Heizdrähten oder Drahtgeflechten aus Metall, welche jeweils auf einen Kunststoffschlauch aufgewickelt werden. Zur Beschickung mit elektrischem Strom müssen die Drahtenden entsprechend vereinzelt, isoliert und geeignet mit einer Stromquelle kontaktiert werden.

Aufgedruckte Heizelemente hingegen kennt man nur aus dem Bereich der flächigen Sitzheizungen oder elektrischen Fußbodenheizungen, jedenfalls nicht bei beheizbaren flexiblen Schläuchen.

Spezialanwendungen aus anderen technischen Gebieten sind beispielsweise gedruckte, eingebrannte Heizschleifen (Dickschicht) auf Durchlauferhitzer-Elementen.

Insbesondere hat es sich in der Praxis als problematisch erwiesen, den Heizdraht elektrisch anzuschließen und die erforderlichen Isolationen aufzuspleißen. Des Weiteren führen die vielen möglichen Varianten von Heizdrähten sowie die jeweils notwendigen Anpassungen daran zu einem erhöhten Aufwand.

Weitere Nachteile der bekannten Systeme ergeben sich zudem daraus, dass sich der Heizdraht oftmals von der Oberfläche abhebt und ein ausreichender Wärmeübergang nicht immer optimal gewährleistet ist. Die Kontaktfläche von einem im Querschnitt runden Draht zu einer -wenngleich gekrümmten- Fläche ist immer linienförmig und daher relativ klein, sodass zur Beheizung der Fläche entsprechend mehr Energie benötigt wird.

### Aufgabe der Erfindung

Aufgabe der vorliegenden Erfindung ist es demgegenüber, mit möglichst einfachen technischen Mitteln ein unaufwändiges und kostengünstiges flexibles und beheizbares Leitungssystem der eingangs beschriebenen Art bereitzustellen, das besonders leicht herzustellen, räumlich kompakt, flexibel, einfach zu handhaben und möglichst universell einsetzbar sein soll. Ein wesentlicher Teil der technischen Aufgabe, die von der vorliegenden Erfindung gelöst werden soll, liegt auch darin, die erforderliche Handarbeit bei der Herstellung und Handhabung des Heizsystems wesentlich zu verringern, eine Automatisierung so weit wie möglich zu begünstigen, die Variantenvielfalt zu reduzieren, den Wärmeübertrag von den Heizelementen auf den Schlauch zu erhöhen und dabei Heizenergie einzusparen.

### Kurze Beschreibung der Erfindung

Erfindungsgemäß wird diese -relativ komplexe- Aufgabe auf ebenso überraschend einfache wie wirkungsvolle Weise dadurch gelöst, dass die Heizeinrichtung eine auf die Oberfläche aus Nichtleitermaterial aufgebrachte, chemisch fest mit dieser verbundene, die Oberfläche über den ersten axialen Abschnitt zumindest teilweise bedeckende, elektrisch leitfähige Beschichtung aufweist.

### Wirkungsweise der Erfindung und weitere Vorteile gegenüber dem Stand der Technik

Die vorliegende Erfindung schlägt also ein neuartiges Heizsystem vor, welches es ermöglicht, etwa mittels einer einfachen Bedruckung die bisher zum Einsatz kommenden Heizdrähte vollständig zu ersetzen. Hierfür kann das Muster der aufgebrachten Heizschicht sowie auch das elektrische Zuleitungssystem je nach Anforderung individuell angepasst werden.

Das System ist besonders einfach und kostengünstig in Bezug auf die -ohne Weiteres automatisierbare- Herstellung sowie die einfache Montage inklusive der Benutzerfreundlichen Anschlussmöglichkeit an eine elektrische Strom- beziehungsweise Spannungsquelle. Das System ist weitgehend unabhängig von der Art des verwendeten Schlauches für die unterschiedlichsten Zwecke einsetzbar.

Da das System nur geringe Toleranzanforderungen stellt, ist es nahezu universell verwendbar, insbesondere auch für sehr unterschiedliche benötigte Schlauchdurchmesser. Nichtsdestoweniger benötigt das System aber keine größere Anzahl an Einzelelementen im Vergleich zu den aus dem Stand der Technik bekannten bisherigen Systemen.

Besonders vorteilhaft beim erfindungsgemäßen System ist ferner, dass wesentliche Einzelelemente bereits vor dem Konfektionieren des Schlauches vormontiert werden. Somit gestaltet sich eine Handhabung des erfindungsgemäß beheizten Leitungssystems vor Ort wesentlich schneller, leichter und effizienter.

Im Vergleich zu den oben diskutierten bekannten Systemen ist aufgrund der vorliegenden Erfindung nur eine vergleichsweise geringe Variantenvielfalt erforderlich, da der zu beheizende Schlauch auf großen Rohmaterial-Rollen vorkonfektioniert und dann einfach auf die jeweils erforderliche axiale Länge abgeschnitten werden kann.

### Bevorzugte Ausführungsformen der Erfindung

In der Praxis bewähren sich Ausführungsformen der Erfindung, bei denen die elektrisch leitfähige Beschichtung aus einem Material mit einem spezifischen Widerstand p ≥ 5Ωmm²/m, vorzugsweise 10Ωmm²/m ≤ p ≤ 250Ωmm²/m, aufgebaut ist.

Bei weiteren vorteilhaften Ausführungsformen der Erfindung ist die elektrisch leitfähige Beschichtung -je nach individuellem Einsatzzweck des beheizbaren Schlauches- aus Kohlenstoff-haltigem Material und/oder aus einer mit elektrisch leitfähigen, insbesondere metallischen, Partikeln durchsetzten homogenen Masse aufgebaut.

Besonders vorteilhaft ist es auch, wenn die elektrisch leitfähige Beschichtung mittels Bedruckung und/oder Lackierung und/oder Tauchen und/oder Bedampfen auf die Oberfläche aus NichtleiterMaterial aufgebracht ist. Damit wird eine kostengünstige Prozessierung durch moderne Druck- und/oder BeschichtungsVerfahren ermöglicht.

Des Weiteren kann bei vorteilhaften, insbesondere energiesparenden Ausführungsformen der Erfindung die Dicke der elektrisch leitfähigen Beschichtung relativ gering gewählt werden, vorzugsweise maximal 200µm betragen. Dies ermöglicht eine extrem gleichmäßige Erwärmung sowie einen sehr guten Wärmeübergang auf den Schlauch.

Ganz besonders bevorzugt ist eine Klasse von Ausführungsformen der erfindungsgemäßen Vorrichtung, die sich dadurch auszeichnen, dass die elektrisch leitfähige Beschichtung eine um die Schlauchachse verlaufende Helix-förmige Struktur aufweist. Damit lässt sich eine besonders einfache Prozessierung im Durchlaufverfahren realisieren.

Dabei werden besonders Weiterbildungen dieser Ausführungsformen bevorzugt, bei denen die elektrisch leitfähige Beschichtung eine Doppelhelix-förmige Struktur aufweist. Hierdurch wird eine besonders gleichmäßige Beheizung des Schlauches unter Einstellung der Temperatur mittels der jeweiligen Steigung der Helix Formen ermöglicht.

Weitere vorteilhafte Varianten dieser speziellen Weiterbildung der Erfindung sind dadurch gekennzeichnet, dass die beiden Helices der Doppelhelix-förmigen Struktur an einem ersten axialen Ende des ersten axialen Abschnitts elektrisch miteinander kurzgeschlossen sind, und dass an dem gegenüberliegenden zweiten axialen Ende eine ringförmige Muffe über den Schlauch geschoben ist, über welche an die beiden Helices der Doppelhelix-förmigen Struktur jeweils eine unterschiedliche elektrische Spannung angelegt werden kann. Auf diese Weise können beliebige Längen von Schläuchen ohne Rückführung eines Heizdrahtes oder einer elektrischen Kontaktleitung konfektioniert werden.

Diese Varianten lassen sich noch dadurch weiter verbessern, dass der elektrische Kurzschluss der beiden Helices am ersten axialen Ende des ersten axialen Abschnitts über ein auf den Schlauch aufschiebbares, vorzugsweise Muffen-förmiges, elektrisches Verbindungselement hergestellt werden kann. So ist dann keine Handarbeit für die Drahtkonfektionierung und eine Stecker-Anbindung mehr nötig.

Erfindungsgemäß weist die nach außen gerichtete Oberfläche aus Nichtleitermaterial mindestens zwei parallel zur Schlauchachse mit Abstand in Umfangsrichtung voneinander unterbrechungsfrei über die gesamte Länge des ersten axialen Abschnitts verlaufende metallische Leiterbahnen auf, und die elektrisch leitfähige Beschichtung besitzt eine geringere Konduktivität als die metallischen Leiterbahnen. Dies ergibt insbesondere eine gleichmäßige Stromverteilung über die Schlauchlänge.

Bei vorteilhaften Weiterbildungen dieser Klasse von Ausführungsformen weist die elektrisch leitfähige Beschichtung in axialer Richtung voneinander beabstandete, die Schlauchachse azimutal umgebende Abschnitte auf, die von einer Leiterbahn zur einer benachbarten Leiterbahn verlaufen und die elektrisch mit den Leiterbahnen kontaktiert sind. Durch verschiedene Muster und Materialien lässt sich die Temperatur -zumindest in gewissen Grenzen- regeln, so dass sehr oft der übliche PTC und auch eine Temperaturregelung überflüssig werden.

Bevorzugt sind Varianten dieser Weiterbildungen, bei denen die Abschnitte der elektrisch leitfähigen Beschichtung Ring-förmig oder Teilring-förmig sind. Dadurch können die Schläuche auch unsymmetrisch -je nach Anforderung- beheizt werden.

Bei ergänzenden oder alternativen Weiterbildungen dieser Klasse von Ausführungsformen ist es von Vorteil, wenn die metallischen Leiterbahnen aus einem Material mit einem spezifischen Widerstand p ≤ 5Ωmm²/m, vorzugsweise p ≤ 1Ωmm²/m, aufgebaut sind.

Vorzugsweise beträgt die Dicke d der metallischen Leiterbahnen maximal 1mm, vorzugsweise 0,01mm ≤ d ≤ 1mm.

Ganz besonders bevorzugt im Hinblick auf eine Nutzung von günstigen Möglichkeiten zur Prozessierung ist eine Klasse von Weiterbildungen, bei denen die metallischen Leiterbahnen mittels Bedrucken und/oder Lackierung und/oder Laminieren und/oder Bedampfen auf die Oberfläche aus Nichtleitermaterial aufgebracht sind.

Die Weiterbildungen dieser Klasse lassen sich bei vorteilhaften Varianten noch dadurch verbessern, dass die metallischen Leiterbahnen vor ihrem Aufbringen auf die Oberfläche aus Nichtleitermaterial als bandförmige Folie vorliegen. Dies ermöglicht ein besonders kostengünstiges Auflaminieren der Leiterbahnen.

Hier wiederum sind Varianten von Vorteil, bei denen die metallischen Leiterbahnen aus Silber- und/oder Gold- und/oder Kupfer- und/oder Aluminium- und/oder Messing-Folie oder Legierungen daraus aufgebaut sind.

Weitere Merkmale und Vorteile der Erfindung ergeben sich aus der nachfolgenden detaillierten Beschreibung von Ausführungsbeispielen der Erfindung anhand der Figuren der Zeichnung, die erfindungswesentliche Einzelheiten zeigt, sowie aus den Ansprüchen. Die einzelnen Merkmale können je einzeln für sich oder zu mehreren in beliebigen Kombinationen bei Varianten der Erfindung verwirklicht sein.

### Detaillierte Beschreibung der Erfindung und Zeichnung

In der schematischen Zeichnung sind Ausführungsbeispiele der Erfindung dargestellt, welche in der nachfolgenden Beschreibung näher erläutert werden.

Im Einzelnen zeigen:
- Fig. 1: eine schematische, teilweise transparente räumliche Ansicht einer ersten Ausführungsform der erfindungsgemäßen Vorrichtung mit vollflächiger elektrisch leitfähiger Beschichtung sowie mit zwei parallel zur Schlauchachse gegenüberliegend angeordneten metallischen Leiterbahnen;
- Fig. 2a: eine schematische, teilweise transparente Seitenansicht einer zweiten Ausführungsform der erfindungsgemäßen Vorrichtung mit Helix-förmiger Struktur der elektrisch leitfähigen Beschichtung;
- Fig. 2b: eine schematische, teilweise transparente Seitenansicht einer dritten Ausführungsform der erfindungsgemäßen Vorrichtung mit Doppelhelix-förmiger Struktur der elektrisch leitfähigen Beschichtung und ringförmiger Kontakt-Muffe;
- Fig. 3a: eine schematische, teilweise transparente Seitenansicht einer vierten Ausführungsform der erfindungsgemäßen Vorrichtung mit Helix-förmiger Struktur der elektrisch leitfähigen Beschichtung sowie mit zwei parallel zur Schlauchachse gegenüberliegend angeordneten metallischen Leiterbahnen; und
- Fig. 3b: eine schematische, teilweise transparente Seitenansicht einer fünften Ausführungsform der erfindungsgemäßen Vorrichtung mit verschiedenen Strukturen der elektrisch leitfähigen Beschichtung (stegförmig, teilringförmig, ringförmig, Doppelhelix-förmig) sowie mit zwei parallel zur Schlauchachse gegenüberliegend angeordneten metallischen Leiterbahnen.

Die vorliegende Erfindung befasst sich mit einem speziell modifizierten System zur elektrischen Beheizung eines Schlauches. Üblicherweise handelt es sich um einen flexiblen länglichen **Schlauch 10; 20a; 20b; 30a; 30b** mit mindestens einer nach außen gerichteten **Oberfläche 11; 21a; 21b; 31a; 31b** aus Nichtleitermaterial, insbesondere aus Kunststoff oder Kautschuk, auf welcher zumindest über einen ersten axialen Abschnitt längs der Schlauchachse eine elektrisch betreibbare Heizeinrichtung aufgebracht ist, die die Oberfläche 11; 21a; 21b; 31a; 31b in Umfangsrichtung im Wesentlichen gleichmäßig beheizen kann.

Dieser Schlauch 10; 20a; 20b; 30a; 30b ist erfindungsgemäß dadurch gekennzeichnet, dass die Heizeinrichtung eine auf die Oberfläche 11; 21a; 21b; 31a; 31b aus Nichtleitermaterial aufgebrachte, chemisch fest mit dieser verbundene, die Oberfläche 11; 21a; 21b; 31a; 31b über den ersten axialen Abschnitt zumindest teilweise bedeckende, **elektrisch leitfähige Beschichtung 12; 22a; 22b; 32a; 32b'; 32b"; 32b"'; 32b""** aufweist.

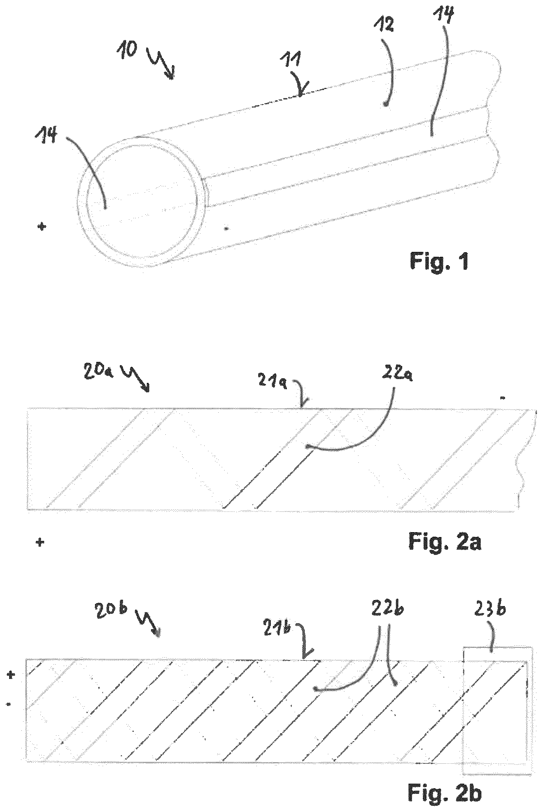

Die Beschichtung 12 kann, wie in **Fig. 1** dargestellt, die gesamte Oberfläche 11 vollflächig bedecken.
In den Ausführungsformen der Figuren 2a bis 3b hingegen ist die elektrisch leitfähige Beschichtung 22a; 22b; 32a; 32b'; 32b"; 32b"'; 32b"" auf der Oberfläche 21a; 21b; 31a; 31b strukturiert aufgebracht.

So besitzt etwa bei der in **Fig. 2a** dargestellten Ausführungsform des erfindungsgemäßen Schlauches 20a die elektrisch leitfähige Beschichtung 22a auf der Oberfläche 21a eine um die Schlauchachse verlaufende Helix-förmige Struktur.

Bei der Ausführungsform von **Fig. 2b** hingegen weist die elektrisch leitfähige Beschichtung 22b auf der Oberfläche 21b eine Doppelhelix-förmige Struktur auf. Außerdem ist an einem axialen Ende des in Fig. 2b gezeigten erfindungsgemäßen Schlauches 20b eine auf den Schlauch 20b aufschiebbare ringförmige **Muffe 23b** erkennbar, mittels welcher entweder unterschiedliche elektrische Spannungen an zwei Endabschnitte der Doppelhelix-Struktur angelegt oder diese Enden elektrisch kurzgeschlossen werden können.

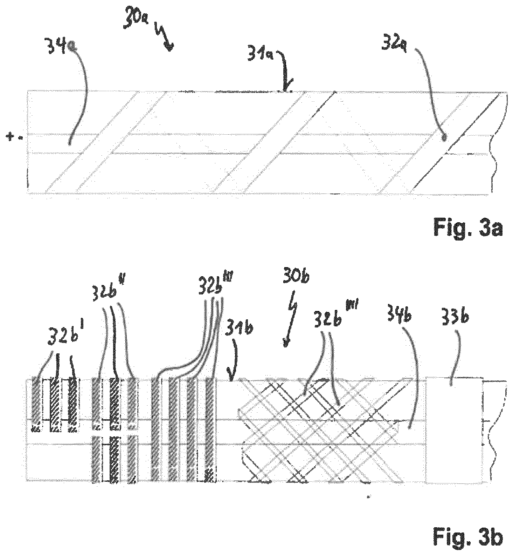

In den Figuren 1, 3a und 3b sind Ausführungsformen der Erfindung dargestellt, bei welchen die nach außen gerichtete Oberfläche 11; 31a; 31b aus Nichtleitermaterial mindestens zwei parallel zur Schlauchachse mit azimutalem Abstand voneinander unterbrechungsfrei über die gesamte Länge des ersten axialen Abschnitts verlaufende **metallische Leiterbahnen 14; 34a; 34b** aufweist. Die elektrisch leitfähige Beschichtung 12; 32a; 32b'; 32b"; 32b"'; 32b"" besitzt in jedem Fall eine geringere Konduktivität als diese metallischen Leiterbahnen 14; 34a; 34b.

Die in **Fig. 3a** gezeigte Ausführungsform des erfindungsgemäßen Schlauches 30a weist auf der Oberfläche 31a eine um die Schlauchachse verlaufende, Helix-förmig strukturierte elektrisch leitfähige Beschichtung 32a auf, welche über die metallischen Leiterbahnen 34a jeweils zwischen zwei aufeinander folgenden Überkreuzungsbereichen mit elektrischer Spannung entgegengesetzter Polarität versorgt werden, so dass in dem Abschnitt zwischen diesen beiden Überkreuzungsbereichen jeweils ein Heizstrom durch die leitfähige Beschichtung 32a fließen kann.

**Fig. 3b** schließlich stellt schematisch -zur Illustration der großen Vielzahl an Gestaltungsmöglichkeiten- parallel insgesamt vier weitere Ausführungsformen der Erfindung mit unterschiedlich strukturierten elektrisch leitfähigen Beschichtungen 32b'; 32b"; 32b"'; 32b"" dar. In allen Fällen weist jeweils die Beschichtung 32b'; 32b"; 32b"'; 32b"" in axialer Richtung voneinander beabstandete, die Schlauchachse azimutal umgebende Abschnitte auf, die von der metallischen Leiterbahn 34b zur einer benachbarten (in der Figur nicht erkennbaren) Leiterbahn verlaufen und die elektrisch mit der Leiterbahnen 34b kontaktiert sind. Die Abschnitte der elektrisch leitfähigen Beschichtung 32b'; 32b"; 32b"' in der linken Bildhälfte sind jeweils Ring-förmig oder Teilring-förmig, während die elektrisch leitfähigen Beschichtung 32b"" im mittleren Bild (ähnlich wie die Ausführungsform von Fig. 2b) eine Doppelhelix-förmige Struktur aufweist. Am rechten Bildrand ist eine aufschiebbare **ringförmige Muffe 33b** erkennbar, mittels welcher entweder unterschiedliche elektrische Spannungen an zwei Endabschnitte der Beschichtungs-Struktur angelegt oder diese Enden elektrisch kurzgeschlossen werden können.

### Bezugszeichenliste:

- 10; 20a; 20b; 30a; 30b: flexibler länglicher Schlauch
- 11; 21a; 21b; 31a; 31b: Oberfläche aus Nichtleitermaterial
- 12; 22a; 22b; 32a;: elektrisch leitfähige Beschichtung
- 32b'; 32b"; 32b"'; 32b"" 23b; 33b: ringförmige Muffe
- 14; 34a; 34b: metallische Leiterbahnen

## Patentansprüche

1. Länglicher Schlauch (10; 20a; 20b; 30a; 30b) mit mindestens einer nach außen gerichteten Oberfläche (11; 21a; 21b; 31a; 31b) aus Nichtleitermaterial, auf welcher zumindest über einen ersten axialen Abschnitt längs der Schlauchachse eine elektrisch betreibbare Heizeinrichtung aufgebracht ist, die die Oberfläche (11; 21a; 21b; 31a; 31b) in Umfangsrichtung im Wesentlichen gleichmäßig beheizen kann, wobei die Heizeinrichtung eine auf die Oberfläche (11; 21a; 21b; 31a; 31b) aus Nichtleitermaterial aufgebrachte, chemisch fest mit dieser verbundene, die Oberfläche (11; 21a; 21b; 31a; 31b) über den ersten axialen Abschnitt zumindest teilweise bedeckende, elektrisch leitfähige Beschichtung (12; 22a; 22b; 32a; 32b'; 32b"; 32b"'; 32b"") aufweist,
**dadurch gekennzeichnet,**
**dass** der längliche Schlauch (10; 20a; 20b; 30a; 30b) mechanisch flexibel und drahtfrei gestaltet ist,
**dass** das Nichtleitermaterial aus Kunststoff oder Kautschuk aufgebaut ist,
**dass** die nach außen gerichtete Oberfläche (11; 31a; 31b) aus Nichtleitermaterial mindestens zwei parallel zur Schlauchachse mit Abstand in Umfangsrichtung voneinander unterbrechungsfrei über die gesamte Länge des ersten axialen Abschnitts verlaufende, streifenförmig flächige, metallische Leiterbahnen (14; 34a; 34b) aufweist,
und **dass** die elektrisch leitfähige Beschichtung (12; 32a; 32b'; 32b"; 32b"'; 32b"") eine geringere Konduktivität besitzt als die metallischen Leiterbahnen (14; 34a; 34b).

2. Länglicher Schlauch nach Anspruch 1, **dadurch gekennzeichnet, dass** die elektrisch leitfähige Beschichtung (12; 22a; 22b; 32a; 32b'; 32b"; 32b"'; 32b"") aus einem Material mit einem spezifischen Widerstand p ≥ 5Ωmm²/m, vorzugsweise 10Ωmm²/m ≤ p ≤ 250Ωmm²/m, aufgebaut ist.

3. Länglicher Schlauch nach Anspruch 1 oder 2, **dadurch gekennzeichnet, dass** die elektrisch leitfähige Beschichtung (12; 22a; 22b; 32a; 32b'; 32b"; 32b"'; 32b"") aus Kohlenstoff-haltigem Material und/oder aus einer mit elektrisch leitfähigen, insbesondere metallischen, Partikeln durchsetzten homogenen Masse aufgebaut ist.

4. Länglicher Schlauch nach einem der vorhergehenden Ansprüche, **dadurch gekennzeichnet, dass** die elektrisch leitfähige Beschichtung (12; 22a; 22b; 32a; 32b'; 32b"; 32b"'; 32b"") mittels Bedruckung und/oder Lackierung und/oder Tauchen und/oder Bedampfen auf die Oberfläche (11; 21a; 21b; 31a; 31b) aus Nichtleitermaterial aufgebracht ist.

5. Länglicher Schlauch nach einem der vorhergehenden Ansprüche, **dadurch gekennzeichnet, dass** die Dicke der elektrisch leitfähige Beschichtung (12; 22a; 22b; 32a; 32b'; 32b"; 32b"'; 32b"") maximal 200µm beträgt.

6. Länglicher Schlauch nach einem der vorhergehenden Ansprüche, **dadurch gekennzeichnet, dass** die elektrisch leitfähige Beschichtung (22a; 22b; 32a; 32b"") eine um die Schlauchachse verlaufende Helix-förmige Struktur aufweist.

7. Länglicher Schlauch nach Anspruch 6, **dadurch gekennzeichnet, dass** die elektrisch leitfähige Beschichtung (22b; 32b"") eine Doppelhelix-förmige Struktur aufweist.

8. Länglicher Schlauch nach einem der vorhergehenden Ansprüche, **dadurch gekennzeichnet, dass** die elektrisch leitfähige Beschichtung (32a; 32b'; 32b"; 32b"'; 32b"") in axialer Richtung voneinander beabstandete, die Schlauchachse in Umfangsrichtung umgebende Abschnitte aufweist, die von einer Leiterbahn (34a; 34b) zur einer benachbarten Leiterbahn verlaufen und die elektrisch mit den Leiterbahnen (34a; 34b) kontaktiert sind.

9. Länglicher Schlauch nach Anspruch 8, **dadurch gekennzeichnet, dass** die Abschnitte der elektrisch leitfähigen Beschichtung (32b'; 32b"; 32b"') Ring-förmig oder Teilring-förmig sind.

10. Länglicher Schlauch nach einem der vorhergehenden Ansprüche, **dadurch gekennzeichnet, dass** die metallischen Leiterbahnen (14; 34a; 34b) aus einem Material mit einem spezifischen Widerstand p ≤ 5Ωmm²/m, vorzugsweise p ≤ 1Ωmm²/m aufgebaut sind.

11. Länglicher Schlauch nach einem der vorhergehenden Ansprüche, **dadurch gekennzeichnet, dass** die Dicke d der metallischen Leiterbahnen (14; 34a; 34b) maximal 1mm, vorzugsweise 0,01mm ≤ d ≤ 1mm, beträgt.

12. Länglicher Schlauch nach einem der vorhergehenden Ansprüche, **dadurch gekennzeichnet, dass** die metallischen Leiterbahnen (14; 34a; 34b) mittels Bedrucken und/oder Lackierung und/oder Laminieren und/oder Bedampfen auf die Oberfläche (11; 31a; 31b) aus Nichtleitermaterial aufgebracht sind, vor ihrem Aufbringen auf die Oberfläche (11; 31a; 31b) aus Nichtleitermaterial vorzugsweise als bandförmige Folie vorliegen und insbesondere aus Silber- und/oder Gold- und/oder Kupfer- und/oder Aluminium- und/oder Messing-Folie oder Legierungen daraus aufgebaut sind.

## Claims

1. Elongate hose (10; 20a; 20b; 30a; 30b), comprising at least one outwardly facing surface (11; 21a; 21b; 31a; 31b) made of non-conductive material, to which an electrically operable heating device is applied at least over a first axial portion along the hose axis, which heating device can heat the surface (11; 21a; 21b; 31a; 31b) substantially uniformly in the circumferential direction, the heating device having an electrically conductive coating (12; 22a; 22b; 32a; 32b'; 32b"; 32b'"; 32b"") which is applied onto the surface (11; 21a; 21b; 31a; 31b) made of non-conductive material, is chemically rigidly connected to said surface and at least partly covers the surface (11; 21a; 21b; 31a; 31b) over the first axial portion, **characterized in that** the elongate hose (10; 20a; 20b; 30a; 30b) is designed to be mechanically flexible and wire-free, **in that** the non-conductive material consists of plastics material or rubber, **in that** the outwardly facing surface (11; 31a; 31b) made of non-conductive material has at least two flat, metal conducting tracks (14; 34a; 34b) in strip form which extend in parallel with the hose axis at a distance from one another in the circumferential direction without interruption over the entire length of the first axial portion, and **in that** the electrically conductive coating (12; 32a; 32b'; 32b"; 32b'"; 32b"") has a lower conductivity than the metal conducting tracks (14; 34a; 34b).

2. Elongate hose according to claim 1, **characterized in that** the electrically conductive coating (12; 22a; 22b; 32a; 32b'; 32b"; 32b'"; 32b"") consists of a material having a specific resistance p ≥ 5 Ωmm²/m, preferably 10 Ωmm²/m ≤ p ≤ 250 Ωmm²/m.

3. Elongate hose according to either claim 1 or claim 2, **characterized in that** the electrically conductive coating (12; 22a; 22b; 32a; 32b'; 32b"; 32b'"; 32b"") consists of carbon-containing material and/or of a homogeneous mass interspersed with electrically conductive, in particular metal, particles.

4. Elongate hose according to any of the preceding claims, **characterized in that** the electrically conductive coating (12; 22a; 22b; 32a; 32b'; 32b"; 32b'"; 32b"") is applied onto the surface (11; 21a; 21b; 31a; 31b) made of non-conductive material by means of printing and/or painting and/or dip coating and/or thermal evaporation.

5. Elongate hose according to any of the preceding claims, **characterized in that** the thickness of the electrically conductive coating (12; 22a; 22b; 32a; 32b'; 32b"; 32b'"; 32b"") is at most 200 µm.

6. Elongate hose according to any of the preceding claims, **characterized in that** the electrically conductive coating (22a; 22b; 32a; 32b"") has a helical structure which extends around the hose axis.

7. Elongate hose according to claim 6, **characterized in that** the electrically conductive coating (22b; 32b"") has a double helical structure.

8. Elongate hose according to any of the preceding claims, **characterized in that** the electrically conductive coating (32a; 32b'; 32b"; 32b'"; 32b"") has portions which are spaced apart from one another in the axial direction, surround the hose axis in the circumferential direction, extend from one conducting track (34a; 34b) to an adjacent conducting track and are in electrical contact with the conducting tracks (34a; 34b).

9. Elongate hose according to claim 8, **characterized in that** the portions of the electrically conductive coating (32b'; 32b"; 32b'") are ring-shaped or partially ring-shaped.

10. Elongate hose according to any of the preceding claims, **characterized in that** the metal conducting tracks (14; 34a; 34b) consist of a material having a specific resistance p ≤ 5 Ωmm²/m, preferably p ≤ 1 Ωmm²/m.

11. Elongate hose according to any of the preceding claims, **characterized in that** the thickness d of the metal conducting tracks (14; 34a; 34b) is at most 1 mm, preferably 0.01 mm ≤ d ≤ 1 mm.

12. Elongate hose according to any of the preceding claims, **characterized in that** the metal conducting tracks (14; 34a; 34b) are applied onto the surface (11; 31a; 31b) made of non-conductive material by means of printing and/or painting and/or laminating and/or thermal evaporation, and before the tracks are applied onto the surface (11; 31a; 31b) made of non-conductive material, they are present preferably as strip-like foil and they consist in particular of silver foil and/or gold foil and/or copper foil and/or aluminum foil and/or brass foil or alloys thereof.

## Revendications

1. Tuyau allongé (10 ; 20a ; 20b ; 30a ; 30b) comportant au moins une surface (11 ; 21a ; 21b ; 31a ; 31b) en matériau non conducteur tournée vers l'extérieur, sur laquelle est appliqué un dispositif de chauffage électrique au moins sur une première section axiale le long de l'axe de tuyau, lequel dispositif de chauffage peut chauffer la surface (11 ; 21a ; 21b ; 31a ; 31b) sensiblement uniformément dans la direction circonférentielle, le dispositif de chauffage présentant un revêtement électriquement conducteur (12 ; 22a ; 22b ; 32a ; 32b' ; 32b" ; 32b'" ; 32b"") sur la surface (11 ; 21a ; 21b ; 31a ; 31b) en matériau non conducteur, lequel revêtement est chimiquement solidaire de celle-ci et recouvre au moins partiellement la surface (11 ; 21a ; 21b ; 31a ; 31b) sur la première section axiale, **caractérisé en ce que**
le tuyau allongé (10 ; 20a ; 20b ; 30a ; 30b) est réalisé flexible mécaniquement et sans fil, **en ce que** le matériau non conducteur est constitué de plastique ou de caoutchouc,
**en ce que** la surface (11 ; 31a ; 31b) en matériau non conducteur tournée vers l'extérieur présente au moins deux pistes conductrices métalliques (14 ; 34a ; 34b) plates en forme de bande et qui s'étendent parallèlement à l'axe de tuyau de façon à être espacées l'une de l'autre dans la direction circonférentielle en continu sur toute la longueur de la première section axiale,
et **en ce que** le revêtement électriquement conducteur (12 ; 32a ; 32b' ; 32b" ; 32b"' ; 32b"") présente une conductivité inférieure à celle des pistes conductrices métalliques (14 ; 34a ; 34b).

2. Tuyau allongé selon la revendication 1, **caractérisé en ce que** le revêtement électriquement conducteur (12 ; 22a ; 22b ; 32a ; 32b' ; 32b" ; 32b"' ; 32b"") est réalisé à partir d'un matériau présentant une résistance spécifique p ≥ 5 Ωmm²/m, de préférence 10 Ωmm²/m ≤ p ≤ 250 Ωmm²/m.

3. Tuyau allongé selon la revendication 1 ou 2, **caractérisé en ce que** le revêtement électriquement conducteur (12 ; 22a ; 22b ; 32a ; 32b' ; 32b" ; 32b"' ; 32b"") est réalisé à partir d'un matériau carboné et/ou à partir d'une masse homogène traversée par des particules électriquement conductrices, en particulier métalliques.

4. Tuyau allongé selon l'une des revendications précédentes, **caractérisé en ce que** le revêtement électriquement conducteur (12 ; 22a ; 22b ; 32a ; 32b' ; 32b" ; 32b"' ; 32b"") est appliqué par impression et/ou laquage et/ou trempage et/ou évaporation sur la surface (11 ; 21a ; 21b ; 31a ; 31b) en matériau non conducteur.

5. Tuyau allongé selon l'une des revendications précédentes, **caractérisé en ce que** l'épaisseur du revêtement électriquement conducteur (12 ; 22a ; 22b ; 32a ; 32b' ; 32b" ; 32b"' ; 32b"") est d'au plus 200 µm.

6. Tuyau allongé selon l'une des revendications précédentes, **caractérisé en ce que** le revêtement électriquement conducteur (22a ; 22b ; 32a ; 32b"") présente une structure hélicoïdale s'étendant autour de l'axe de tuyau.

7. Tuyau allongé selon la revendication 6, **caractérisé en ce que** le revêtement électriquement conducteur (22b ; 32b"") présente une structure hélicoïdale double.

8. Tuyau allongé selon l'une des revendications précédentes, **caractérisé en ce que** le revêtement électriquement conducteur (32a ; 32b' ; 32b" ; 32b"' ; 32b"") présente des sections espacées les unes des autres dans la direction axiale et entourant l'axe de tuyau dans la direction circonférentielle, lesquelles sections s'étendent d'une piste conductrice (34a ; 34b) à une piste conductrice adjacente et sont électriquement en contact avec les pistes conductrices (34a ; 34b).

9. Tuyau allongé selon la revendication 8, **caractérisé en ce que** les sections du revêtement électriquement conducteur (32b' ; 32b" ; 32b"') sont en forme d'anneau ou en forme d'anneau partiel.

10. Tube allongé selon l'une des revendications précédentes, **caractérisé en ce que** les pistes conductrices métalliques (14 ; 34a ; 34b) sont réalisées à partir d'un matériau présentant une résistance spécifique p ≤ 5 Ωmm²/m, de préférence p ≤ 1 Ωmm²/m.

11. Tuyau allongé selon l'une des revendications précédentes, **caractérisé en ce que** l'épaisseur d des pistes conductrices métalliques (14 ; 34a ; 34b) est d'au plus 1 mm, de préférence 0,01 mm ≤ d ≤ 1 mm.

12. Tuyau allongé selon l'une des revendications précédentes, **caractérisé en ce que** les pistes conductrices métalliques (14 ; 34a ; 34b) sont appliquées par impression et/ou laquage et/ou stratification et/ou évaporation sur la surface (11 ; 31a ; 31b) en matériau non conducteur, **en ce qu'**elles se présentent de préférence sous forme d'un film en forme de bande avant leur application sur la surface (11 ; 31a ; 31b) en matériau non conducteur, et en particulier **en ce qu'**elles sont réalisées à partir d'un film en argent et/ou en or et/ou en cuivre et/ou en aluminium et/ou en laiton ou à partir d'alliages de ceux-ci.
